# EUROPEAN PATENT SPECIFICATION

(11) **EP 2 143 629 B1**
(45) Date of publication and mention of the grant of the patent: **24.04.2013**
(21) Application number: 08012310.2
(22) Date of filing: 08.07.2008
(51) Int. Cl.: B63B 22/00, B63B 22/04, B63B 21/50

(54) **Arrangement for stabilization of a floating foundation**
Anordnung zur Stabilisierung für ein schwimmendes Fundament
Agencement pour la stabilisation d'une fondation flottante

(43) Date of publication of application: 13.01.2010
(73) Proprietor: Siemens Aktiengesellschaft, 80333 München (DE)
(72) Inventor: Stiesdal, Henrik, 5000 Odense C (DK)

(56) References cited:
- EP-A- 0 945 337
- EP-B1- 1 467 906
- WO-A-99/62762
- NL-A- 8 701 849
- US-A- 3 778 854
- US-A1- 2003 084 961

## Description

The invention relates to an arrangement for the stabilization of a floating foundation, which is used offshore to carry a wind-turbine.

Floating foundations for wind-turbines are known from WO 2006 132 539 A1 and from WO 2006 121 337 A1 showing so called "spar-buoy". These spar-buoy-types are fixed at a predetermined position by the use of one set of mooring cable.

The EP 1 467 906 B1 document constitutes the closest prior art.

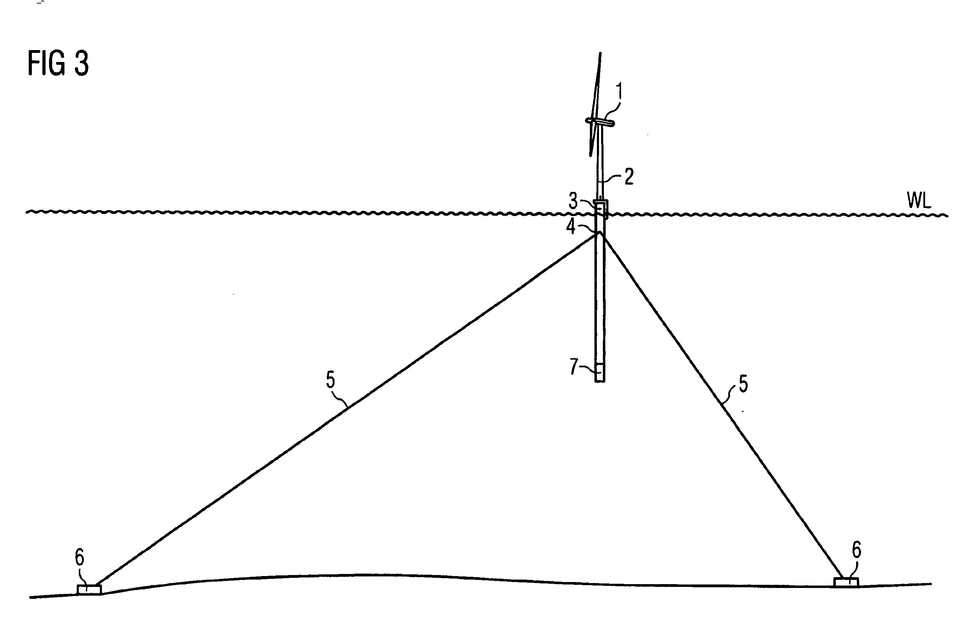

FIG 3 shows a typical spar-buoy foundation according to the state of the art.

A wind-turbine 1 is mounted on a tower 2, which is supported by a spar-buoy foundation 3. There is a set of mooring cables 5. First endings of the mooring cables 5 are attached to the spar-buoy foundation 3 at a certain position 4, while second endings of the mooring cables are attached to anchors 6.

The level of the position 4 is below the waterline WL. There is a balancing weight 7 located on the lower ending of the spar-buoy foundation 3, which is relevant for the stability of the whole construction.

This kind of mooring-arrangement is simple and cheap. But the stability of the foundation relies only on gravity, so an equilibrium is established between overturning moments on the one hand and a restoring moment on the other hand.

The overturning moments are performed by waves and wind while the restoring moment is performed by the weight of the foundation, which acts on the lower end of the foundation.

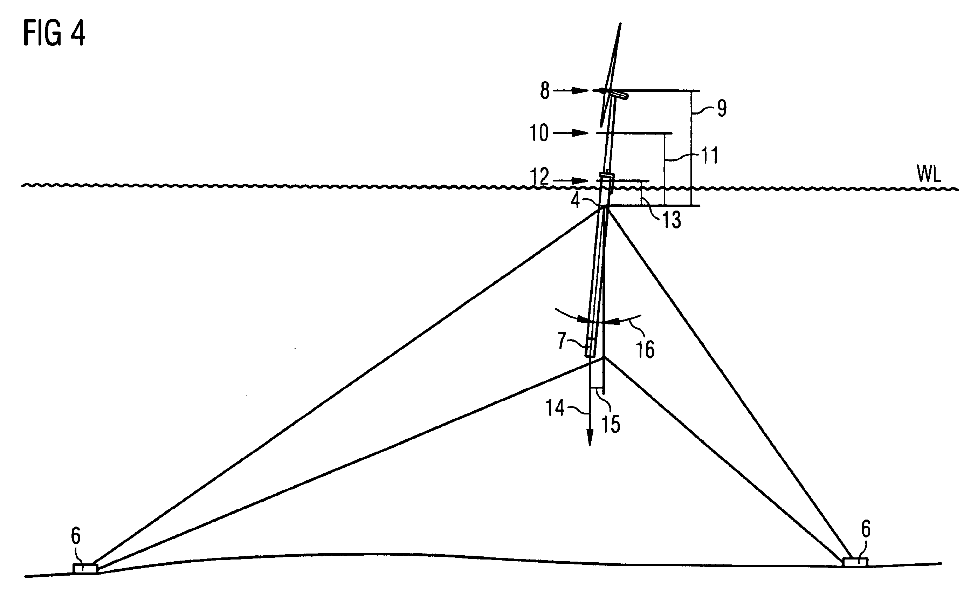

FIG 4 shows with reference to FIG 3 typical operating loads of a normal spar-buoy foundation.

The whole structure is generally exposed to an arising overturning moment.

The overturning moment is defined as multiplication from a wind-load 8, acting on the wind-turbine 1, and a lever-arm 9, which length is defined by the distance between a force centre and the mooring cable attachment 4.

The overturning moment is additionally defined as multiplication from the wind load 10, acting on the tower 2, and a lever-arm 11, which length is defined by the distance between the wind-load-force-centre and the mooring cable attachment 4.

Last the overturning moment is additionally defined as multiplication from a wave and current load 12 multiplied with a arm-lever 13, which is defined by the distance between this force centre and the mooring cable attachment 4.

The restoring moment is the gravity load 14 of the balancing weight 7 multiplied with a lever-arm 15, which is defined by the distance from the gravity force centre to the mooring cable attachment 4.

When the overturning moment and the restoring moment are in equilibrium the structure shows an inclination angle 16.

If the restoring moment is "0" the foundation itself is not inclined. Any overturning moments lead to inclination of the foundation. So the operation of a wind-turbine is negatively affected by the inclination.

Document EP 1467906 B1 discloses a mooring buoy, comprising a submerged part and a part extending above water level. The part above water level comprises a fluid outlet duct for attaching to a vessel. The buoy is anchored to the seabed via anchor legs. A horizontally oriented fluid transfer duct is attached to a connector of the buoy in a non-rigid manner.

Document EP 0945337 A1 discloses a SPAR buoy, which is connected to the seabed by tethers and/or risers. At the top part the floating construction comprises a displacement member mounted on a mounting frame. Two risers and/or tethers, that are placed on respective sides of a vertical center line of the mounting frame, are connected to the displacement members for causing oppositely directed and substantially equal displacements thereof upon tilting and/or the sideways excursion of the floating body. Hereby a similar tension in the connecting elements is maintained.

Documents WO 99/62761A1, NL 8701849 and US 2003/0084961 A1 disclose types of transfer pipe systems, being used to transfer fluids or the like between ships and/or deposits.

It is aim of the present invention, to provide an improved arrangement for the stabilization of a floating foundation, to be used offshore.

This aim is solved by the features of claim 1. Advantageous embodiments of the invention are subject of the dependent claims.

According to the invention the arrangement for stabilization of a foundation is arranged to carry a wind-turbine mounted on a tower. The foundation is fixed with a set of mooring cables. First endings of the mooring cables are attached to the foundation at a certain position while second endings of the mooring cables are attached to the floor. There is a second set of mooring-cables, while first endings of the second set of mooring-cables are attached to the foundation near or at its bottom end. Second endings of the second set of mooring-cables are attached to the floor, too.

The inventive arrangement allows a higher stabilisation of the floating foundation, which is arranged to carry a wind-turbine.

The inventive arrangement is cheap and is easy to implement even at older locations, which are already at work.

The invention will be described now in more detail by the help of some figures, where:
- FIG 1: shows a spar-buoy foundation according to the invention,
- FIG 2: shows with reference to FIG 1 operating loads of the inventive spar-buoy foundation,
- FIG 3: shows a typical spar-buoy foundation according to the state of the art.
- FIG 4: shows with reference to FIG 3 typical operating loads of a normal spar-buoy foundation.

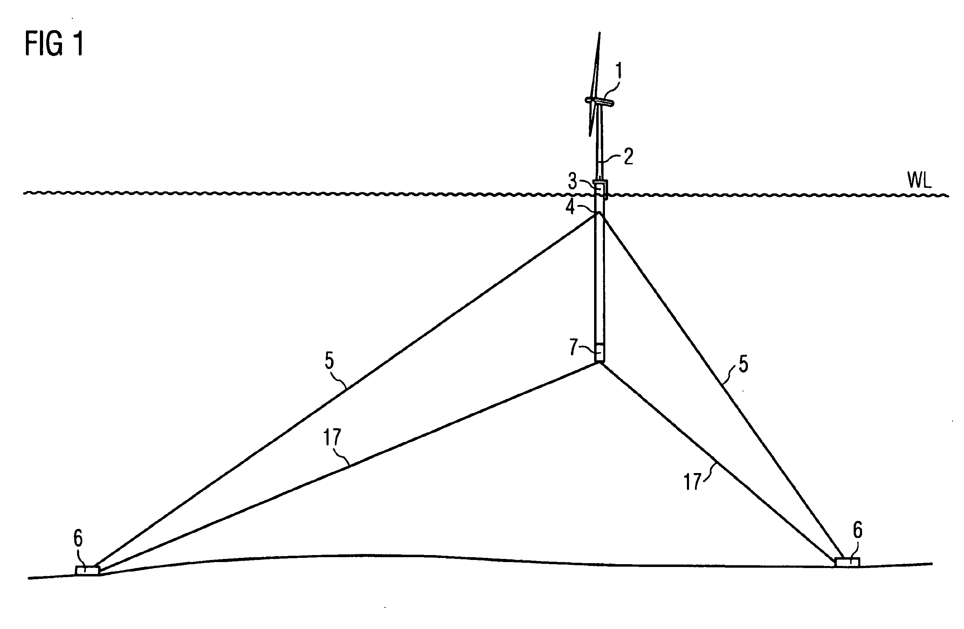

FIG 1 shows a spar-buoy foundation according to the invention.

A wind-turbine 1 is mounted on a tower 2, which is supported by a spar-buoy foundation 3. There is a set of mooring cables 5. First endings of the mooring cables 5 are attached to the spar-buoy foundation 3 at a certain position 4, while second endings of the mooring cables are attached to anchors 6.

The level of the position 4 is below the waterline WL. There is a balancing weight 7 located on the lower ending of the spar-buoy foundation 3, which is relevant for the stability of the whole construction.

According to the invention there is at least another set of mooring cables 17. First endings of the mooring cables 17 are attached to the spar-buoy foundation 3 near or at the bottom end of the foundation 3. Second endings of the mooring cables 17 are attached to the anchors 6, preferably. It is also possible to use another set of anchors for this mooring-cables 17.

In this case the two sets of mooring cables 5 and 17 serve to stabilise the foundation. Therefore the restoring moment will be a combination of a first moment, arising from the weight of the lower end of the foundation, and a second moment, arising from differential forces in the mooring cables 5 and 17.

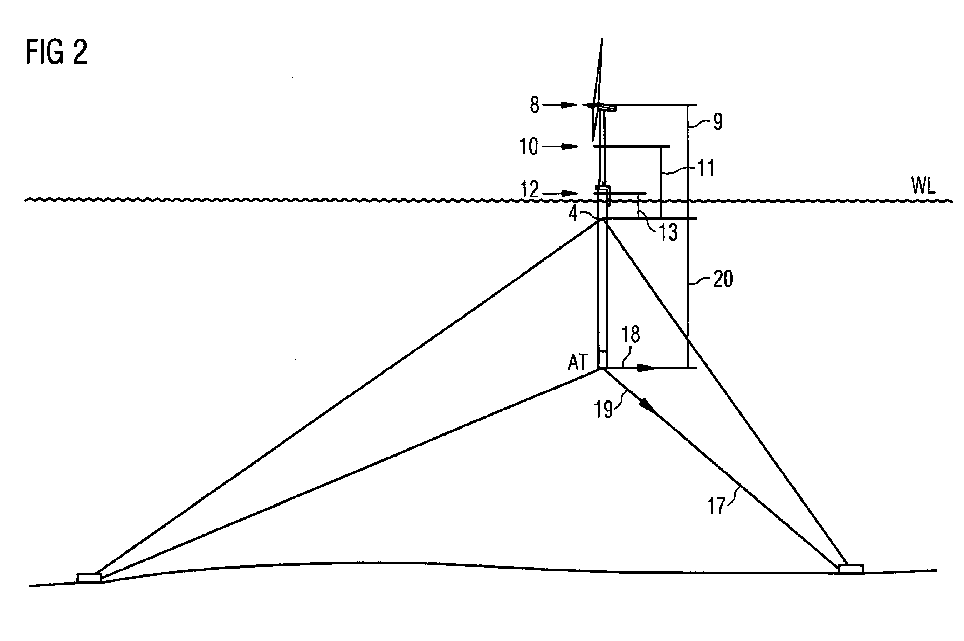

FIG 2 shows with reference to FIG 1 typical operating loads of the inventive spar-buoy foundation 3.

The whole structure is generally exposed to an arising overturning moment.

The overturning moment is defined as multiplication from a wind-load 8, acting on the wind-turbine 1, and a lever-arm 9, which length is defined by the distance between a wind-load-force-centre and the mooring cable attachment 4.

The overturning moment is additionally defined as multiplication from the wind load 10, acting on the tower 2, and a lever-arm 11, which length is defined by the distance between the wind-load-force-centre and the mooring cable attachment 4.

Last the overturning moment is additionally defined as multiplication from a wave and current load 12 multiplied with a arm-lever 13, which is defined by the distance between this force centre and the mooring cable attachment 4.

The restoring moment is the horizontal component 18 of a second mooring cable force 19, multiplied with an arm 20 from the attachment point AT of the second set mooring cables 17 to the attachment point 4 of the first set of mooring cable 5.

When the overturning moment and the restoring moment are in equilibrium the structure has a very small inclination angle.

In the normal mooring arrangement of the spar-buoy foundation as described in FIG 3 and FIG 4 a typical high loading situation would lead to about 13 m displacement of the tower top and about 5 degrees maximum inclination.

According to the invention the mooring arrangement of the spar-buoy foundation the same loading situation will lead to about 3 m displacement of the tower top and about 1.5 degrees maximum inclination. So the inventive arrangement leads to a higher stiffness.

In a preferred embodiment the first set of mooring-cable 5 and/or the second set of mooring cable 17 are fitted with tensioning devices, to allow an adjustment of the relative tautness of the particular set of mooring cable.

## Claims

1. Arrangement for stabilization of a floating foundation (3),
- wherein the foundation (3) is fixed with a set of mooring cables (5),
- wherein first endings of the mooring cables (5) are attached to the foundation (3) at a certain position (4), while the certain position (4) is located below the waterline (WL),
- wherein second endings of the mooring cables (5) are attached to the ground (6),
- wherein first endings of a second set of mooring-cables (17) are attached to the foundation (3) near or at its bottom end,
- wherein a balancing weight (7) is located on the lower end of the foundation (3),
- wherein the second endings of the first set of mooring-cables (5) are attached to the ground by anchors (6), and **characterized in that**
- wherein the foundation (3) is arranged to carry a wind- turbine (1) mounted on a tower (2),
- wherein second endings of the second set of mooring- cables (17) are attached to the ground, too,
- wherein the second endings of the second set of mooring-cables (17) are attached to the ground by the same anchors (6), too.

2. Arrangement according to claim 1, **characterized in that** the first set of mooring cables (5) and/or the second set of mooring cables (17) are fitted with tensioning devices to allow an adjustment of the relative tautness of the particular set of mooring cable.

## Patentansprüche

1. Anordnung zur Stabilisierung eines schwimmenden Fundaments (3),
- wobei das Fundament (3) mit einem Satz von Verankerungstauen (5) befestigt ist,
- wobei erste Enden der Verankerungstaue (5) an dem Fundament (3) an einer gewissen Position (4) befestigt sind, wobei sich die gewisse Position (4) unterhalb der Wasserlinie (WL) befindet,
- wobei zweite Enden der Verankerungstaue (5) am Boden (6) befestigt sind,
- wobei erste Enden eines zweiten Satzes von Verankerungstauen (17) an dem Fundament (3) in der Nähe von oder an dessen unterem Ende befestigt sind,
- wobei ein Ausgleichsgewicht (7) am unteren Ende des Fundaments (3) angeordnet ist,
- wobei die zweiten Enden des ersten Satzes von Verankerungstauen (5) durch Anker (6) am Boden befestigt sind,
**dadurch gekennzeichnet, dass**
- das Fundament (3) dafür eingerichtet ist, eine Windkraftanlage (1) zu tragen, die auf einem Turm (2) montiert ist,
- wobei zweite Enden des zweiten Satzes von Verankerungstauen (17) ebenfalls am Boden befestigt sind,
- wobei die zweiten Enden des zweiten Satzes von Verankerungstauen (17) ebenfalls durch dieselben Anker (6) am Boden befestigt sind.

2. Anordnung nach Anspruch 1, **dadurch gekennzeichnet, dass** der erste Satz von Verankerungstauen (5) und/oder der zweite Satz von Verankerungstauen (17) mit Spannvorrichtungen ausgestattet sind/ist, um eine Einstellung der relativen Straffheit des betreffenden Satzes von Verankerungstauen zu ermöglichen.

## Revendications

1. Agencement pour la stabilisation d'une fondation flottante (3),
- dans lequel la fondation (3) est fixée avec un ensemble de câbles d'amarrage (5),
- dans lequel des premières extrémités des câbles d'amarrage (5) sont fixées à la fondation (3) dans une certaine position (4), tandis que la certaine position (4) se situe en dessous de la ligne de flottaison (WL),
- dans lequel des deuxièmes extrémités des câbles d'amarrage (5) sont fixées au sol (6),
- dans lequel des premières extrémités d'un deuxième ensemble de câbles d'amarrage (17) sont fixées à la fondation (3) près de ou sur son extrémité inférieure,
- dans lequel un poids d'équilibrage (7) est situé sur l'extrémité inférieure de la fondation (3),
- dans lequel les deuxièmes extrémités du premier ensemble de câbles d'amarrage (5) sont fixées au sol par des ancres (6), et **caractérisé en ce que**
- la fondation (3) est agencée pour porter une éolienne (1) montée sur un mât (2),
- des deuxièmes extrémités du deuxième ensemble de câbles d'amarrage (17) sont fixées au sol, également,
- les deuxièmes extrémités du deuxième ensemble de câbles d'amarrage (17) sont fixées au sol par les mêmes ancres (6), également.

2. Agencement selon la revendication 1, **caractérisé en ce que** le premier ensemble de câbles d'amarrage (5) et/ou le deuxième ensemble de câbles d'amarrage (17) sont équipés de dispositifs tendeurs pour permettre un ajustement de la raideur relative de l'ensemble particulier de câbles d'amarrage.
